# EUROPEAN PATENT APPLICATION

(11) **EP 4 663 375 A1**
(43) Date of publication of application: **17.12.2025**
(21) Application number: 25180049.6
(22) Date of filing: 01.06.2025
(51) Int. Cl.: B29C 45/28

(54) **GATE VALVE FOR CONTROLLING A FLOW OF MOLTEN MATERIAL**

(30) Priority: 11.06.2024 IT 202400013333
(71) Applicant: Inglass S.p.A., 31020 San Polo di Piave (Treviso) (IT)
(72) Inventor: ROSSI, Massimo, 31020 San Polo di Piave (TV) (IT); DARIO, Alessandro, 31020 San Polo di Piave (TV) (IT)
(74) Representative: Citron, Massimiliano

(57) **Abstract**

A shut-off valve is described for controlling a flow of molten material from an injector gate towards a mold cavity. The valve comprises a channel, for the molten material, which extends along a first axis up to the gate; a shutter member mounted movably along a respective second axis and so that a free end of the shutter member can move towards, and reach, a point inside the channel to throttle and/or close the channel, thus regulating said flow; and an actuating member having a portion coupled to the shutter member so that a rotation of the actuating member causes a translation of the shutter member along the second axis from and/or towards said point. The actuating member comprises an annular stator fixed on the mold, and an annular rotor rotatably placed inside or outside the stator and coupled to the shutter member.

## Description

The invention relates to a guillotine gate valve for controlling a flow of molten material during injection molding.

It is known to control the flow of molten material exiting a gate towards a mold cavity by means of a stem (*pin or shutter*) that is linearly movable back and forth with a movement concordant with the flow of the molten material. The presence and alternating movement of the stem, however, increases the disturbances on the flow creating areas of accumulation and stagnation of the material, so much so that for example the operation of changing the color of the injected material requires multiple purge injections with a significant waste of material.

Oblique stems such as in EP520345 have the defect of pushing the material against the internal surface of the channel, compressing it further up to the exit. This crushing effect causes the appearance of defects on the final piece. In an attempt to solve the problem, the valve pin has been replaced by a guillotine valve set near the exit gate of the material. This solution, adopted for the simultaneous opening and closing control of multiple injectors placed in line and controlled by a single actuator, is for example shown in EP1409222 (fig. 13). However, a single movable guillotine causes the material to be squeezed towards the perimeter of the gate orifice, which is at a lower temperature, thus causing defects in the molded product.

WO2024095073 shows a better solution, that is, using a rotor to control the shutter members. The system of WO2024095073 can be improved too.

The main object of the invention, defined in the attached claims wherein the dependent claims define advantageous variants, is to improve this state of the art.

A particular object is to improve the actuation of the movable shutter members.

At least one object is achieved by a shut-off valve for controlling a flow of molten material exiting a gate of an injector into a cavity of a mold, comprising:
- a channel, for the molten material, which extends along a first axis up to the gate,
- a shutter member mounted
   - movably along a respective second axis (orthogonal or inclined at an acute or obtuse angle with respect to the first axis) and
   - so that a free end of the shutter member can move towards, and reach, a point inside the channel to throttle and/or close the channel thereby regulating said flow,
- an actuating member having a portion coupled to the shutter member such that a rotation of the actuating member results in a translation of the shutter member along the second axis from and/or toward said point,

wherein the actuating member comprises
   - an annular stator fixed on the mold, and
   - an annular rotor (rotatably arranged inside or outside the stator) and coupled to the shutter member,
   - a first circular array of magnetic poles installed in the rotor,
   - a second circular array of magnetic poles installed in the stator,
the magnetic poles of the first and second circular array being magnetically interacting with each other to rotate the rotor with respect to the stator through a magnetic field generated by them.

Such an actuating member avoids complex control mechanisms of a rotor, such as a rack-and-pinion transmission toward an external motor, which in turn requires a reduction mechanism inside. Thus, the system is simplified, the kinematics are shortened, and transverse holes in the mold and actuators placed outside the mold are avoided.

In addition, the molding system becomes simpler, takes up less space, and there is greater precision in positioning and controlling the shutter member. And there is greater speed of feedback thanks to the reduction of mechanical play, because the kinematic chain is shorter (fewer components), simple and direct.

The stator is preferably ring-shaped and surrounds the rotor, or is placed immediately above or below the rotor.

Preferably the rotor comprises a profile, e.g. one or more grooves or reliefs, for the coupling and command of respective shutter members, a solution that further makes the drive system compact and avoids additional parts, shortening the kinematic chain. In particular, one end of the shutter member comprises a pin or protruding part slidably inserted into a peripheral groove of the rotor, so that a rotation of the rotor causes a rotation of the groove thereby a push on the pin that causes the shutter member to slide. The position of the protruding part and the groove may also be exchanged.

It is sufficient for such profile to act as a cam on the end of the shutter member to convert a rotation of the rotor into a linear translation of the shutter member.

Preferably one or each shutter member is translated via direct mechanical connection to the rotor.

In a preferred variant the magnetic poles of the stator are permanent magnets or electromagnets, preferably fixed and/or placed on an annular cylindrical surface of the stator and facing towards the inside of the stator.

In a preferred variant, the magnetic poles of the stator are windings configured to generate a radial magnetic field whose polar axis is directed towards the center of the stator. These windings may receive electrical signals via brushes arranged fixedly in the stator. The actuating member may behave like a brush motor or like a *stepper motor* via an appropriate control unit.

In a preferred variant the stator is fixed in a corresponding seat of an insert or a plate of the mold.

In other variants, the components that constitute the magnetic poles are swapped with respect to what has been said above, or are replaced by other technology.

Preferably the actuating member is placed in proximity of the gate.

The actuation system for the shutter members of the valve is independent of the number and configuration of the shutter members, which advantageously may be more than one.

In a preferred compact variant, the stator and the rotor extend around (and e.g. also surround) the first axis and/or the channel.

In a preferred variant, the rotor has a rotation axis that is parallel to the first axis, in particular for maximum compactness the rotatable member has a rotation axis coaxial to the first axis.

In a preferred variant, the valve comprises two or more shutter members whose respective second axes are coplanar and arranged
- with sunburst pattern with respect to said point, or
- like the diagonals of a polygon (regular or not), where said point identifies the center of the polygon.

In a preferred variant, the valve comprises only two shutter members movable along the sides of an angle with vertex at said point, where the lying plane of the angle is orthogonal to the first axis or passes through the first axis.

In the case of two or more shutter members, said point becomes a common convergence point, or a closure point of the channel, for the translation of the shutter members (and for the second axes).

In a preferred variant, the valve comprises three or more shutter members and their respective second axes are arranged like the edges of an imaginary pyramid, said convergence point forming the vertex of the pyramid. In a more preferred variant, said imaginary pyramid is arranged so that its base intersects the first axis and the channel, more specifically the base is orthogonal to the first axis.

In a preferred variant, which improves the performance of the injector, the valve comprises two or more shutter members which are actuated by the rotor and mounted
movably along a respective second axis inclined at an acute angle to the first axis and
so that a free end of each shutter member can move and converge towards the same convergence point inside the channel,
the free ends of the shutter members being able to fit together at said convergence point to form a blocking bulkhead for the molten material.

In a preferred variant, the shutter member has the shape of a straight stem which is free at one end and coupled to the actuating member at the opposite end.

The advantages of the invention will be made even clearer by the following description of a preferred valve, wherein
- Fig. 1 shows a cross-sectional view of a shut-off valve;
- Fig. 2 shows a three-dimensional view of the valve components assembled to the actuation system;
- Fig. 3 shows a three-dimensional view of the components of fig. 2 in exploded view.

In the figure, equal members are indicated by equal numbers, and in order not to crowd the drawings, sometimes only some members are numbered.

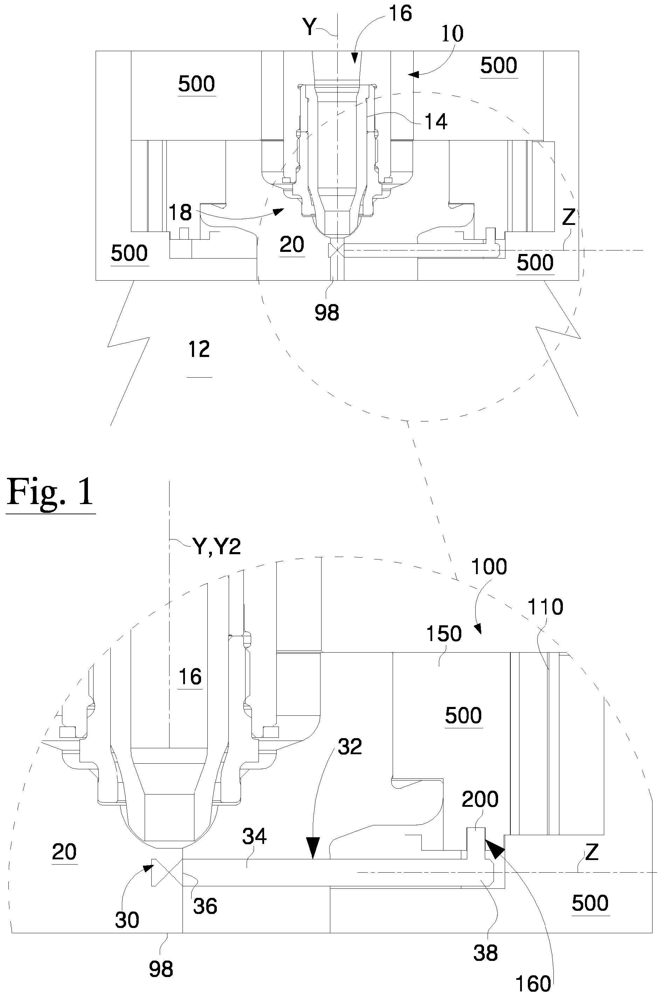

Referring to Figure 1, the end 18 of a known injector 10 used to inject molten material into a mold cavity 12, is shown. The injector 10 is usually mounted inside one or more plates 500 that make up the mold and is fixed to a known manifold for distributing the molten material (the manifold, not shown, being also mounted inside said plates 500). The injector 10 comprises and defines an axial cavity 16 that extends longitudinally along a central axis Y (which preferably is also the axis of polar symmetry for the injector 10). The end 18 of the injector 10 rests on a mold insert 20 having an orifice that determines a gate 98, and the molten material can flow within the cavity 16 up to the gate 98. Overall, the construction of the injector 10 is known, and does not need to be repeated.

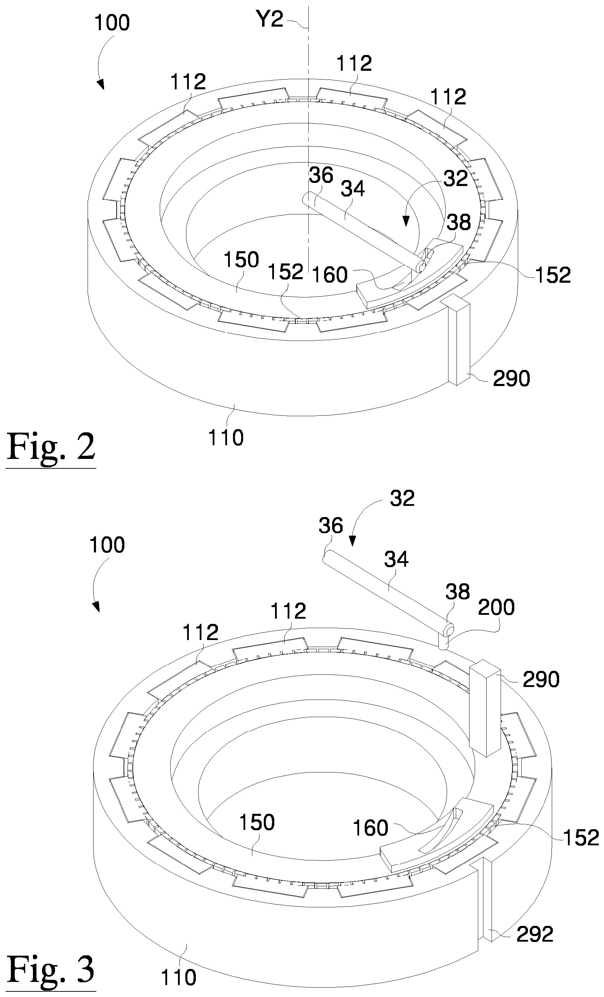

Unlike known injectors, the cavity 16 does not have a *valve pin* arranged in line with the Y axis. The system for regulating the flow of molten material passing through the gate 98 is illustrated in detail in fig. 2 and following.

In a tunnel 30 of the insert 20, or of another plate connected to it, a shutter member 32 is installed in the form of a straight stem 34 which has a free end 36 and the opposite end 38 is coupled to an actuator means 100, an example of which is shown in fig. 2 and 3. The tunnel 30 and the shutter member 32 preferably have a complementary shape.

The actuator means 100 serves to translate the shutter member 32 along a Z axis, and is in the form of a motor, preferably installed in a cavity of the insert 20 around the gate 98.

The actuator means 100 comprises an annular stator 110 fixed on the mold and an annular rotor 150 located inside the stator 110 so as to rotate about an axis Y2.

Mounted on the stator 110 is a circular array of windings 112 configured to generate a magnetic field with a polar axis that is radial with respect to the Y2 axis. Mounted on the rotor 150 is a circular array of permanent magnets 152 with a polar axis that is radial with respect to the Y2 axis. The windings 112 and the permanent magnets 152 are magnetically interacting to rotate - in a known manner - the rotor 150 with respect to the stator 110 around the Y2 axis via a magnetic field generated by them. Therefore, the rotor 150 can rotate in a controlled manner about the Y2 axis, which preferably is parallel or even coincident with the Y axis.

The rotor 150 is coupled to the shutter member 32 to move it back and forth.

In a preferred variant, the end 38 is engaged, e.g. via a protruding pin 200, in a groove 160 formed in the peripheral edge of the rotor 150.

The groove 160 has a profile that follows an arc, e.g. a spiral arc or circumference arc, centered on the Y2 axis or an arc of a circumference that lies on a plane orthogonal to the Y2 axis and has a center offset from the Y2 axis. It is sufficient for this profile to act as a cam on the end 38 to convert a rotation of the rotor 150 into a linear translation of the shutter member 32.

Then, by electrically controlling the windings 112, it is possible to rotate the rotor 150 about the Y2 axis and therefore move the groove 160, which moves the end 36 and causes the shutter member 32 to translate back and forth according to the direction of rotation of the rotor 150.

It is then possible to push the end 38 back and forth along the Z axis, obtaining a proportional sliding of the shutter member 32 inside the tunnel 30, which is followed by the greater or lesser protrusion of the end 36 inside the channel of the gate 98. Such protrusion determines the degree of closure of the gate 98.

The position of the windings 112 and the permanent magnets 152 may be swapped.

The rotor 150 may also operate more than one shutter member at a time, for example two opposing shutter members that can move along the same Z axis. It is sufficient to provide a respective number of grooves 160.

However, it is possible to move more than two shutter shutters simultaneously by installing more actuators 100.

In the examples, the angle between the Z axis and the Y axis is right, but not necessarily: it could be acute or obtuse. In fact, it is sufficient to orient the actuator means 100 or the Z axis differently to obtain inclined trajectories of a shutter member 32. For example, three or more shutter members 32 could be arranged like the edges of a regular pyramid having its axis coinciding with the Y axis.

To block the stator 110 with respect to the mold plate in which it is installed, a key 290 inserted into a perimeter notch 292 of the stator 110 may be used.

## Claims

1. Shut-off valve for controlling a flow of molten material from an injector gate towards a mold cavity, comprising:
• a channel, for the molten material, which extends along a first axis up to the gate,
• a shutter member mounted
- movably along a respective second axis and
- so that a free end of the shutter member can move towards, and reach, a point inside the channel to throttle and/or close the channel, thus regulating said flow,
• an actuating member having a portion coupled to the shutter member so that a rotation of the actuating member causes a translation of the shutter member along the second axis from and/or towards said point,
wherein the actuating member comprises
- an annular stator fixed on the mold,
- an annular rotor rotatably placed inside or outside the stator and coupled to the shutter member,
- a first circular array of magnetic poles installed in the rotor,
- a second circular array of magnetic poles installed in the stator,
the magnetic poles of the first and second circular array being magnetically interacting with each other to rotate the rotor with respect to the stator via a magnetic field generated by them.

2. Valve according to claim 1, wherein the stator is ring-shaped and structured to surround the rotor.

3. Valve according to any one of the preceding claims, wherein the rotor comprises one or more grooves for the coupling and command of respective shutter members.

4. Valve according to any one of the preceding claims, wherein the magnetic poles of the stator are permanent magnets or electromagnets.

5. Valve according to claim 4, wherein the permanent magnets or electromagnets are fixed and/or placed on an annular cylindrical surface of the stator and facing the inside of the stator.

6. Valve according to any one of claims 1 to 3, wherein the magnetic poles of the stator are windings configured to generate a radial magnetic field whose polar axis is directed towards the center of the stator.

7. Valve according to any one of the preceding claims, wherein the stator is fixed in a corresponding seat of an insert or plate of the mold.

8. Valve according to any of the preceding claims, wherein the stator and the rotor extend around and surround the first axis and/or the channel.

9. Valve according to any of the preceding claims, wherein the rotor has a rotation axis that is parallel to the first axis.

10. Valve according to any one of the preceding claims, wherein the shutter member has the shape of a straight stem which has a free end and at the opposite end is coupled to the actuating member.
